# EUROPEAN PATENT SPECIFICATION

(11) **EP 2 909 251 B1**
(45) Date of publication and mention of the grant of the patent: **26.07.2017**
(21) Application number: 13777447.7
(22) Date of filing: 08.10.2013
(51) Int. Cl.: C08G 59/42

(54) **LOW ODOR EPOXY RESIN SYSTEMS BASED ON NADIC ANHYDRIDE-TYPE HARNEDERS**
GERUCHSARME EPOXIDHARZSYSTEME AUF BASIS VON NADIC-ANHYDRID-HÄRTUNGSMITTELN
SYSTÈMES DE RÉSINE ÉPOXY PEU ODORANTS À BASE DE DURCISSEURS DE TYPE ANHYDRIDE NADIQUE

(30) Priority: 19.10.2012 US 201261715851 P
(43) Date of publication of application: 26.08.2015
(73) Proprietor: Dow Global Technologies LLC, Midland, MI 48674 (US)
(72) Inventor: MORLEY, Timothy A., Midland Michigan 48674 (US); KOENIGER, Rainer, CH-8735 St. Gallenkappel (CH); JELIC, Nebjosa, CH-8855 Wangen (CH); MARKS, Maurice J., Lake Jackson, TX 77566 (US); GULYAS, Gyongyi, Lake Jackson, TX 77566 (US); REIMERS, Martin, 77815 BW Buehl-Rittersbach (DE); KUMAR, Bhawesh, Texas 77566 (US)
(74) Representative: Beck Greener
(86) International application number: PCT/US2013/063760
(87) International publication number: WO 2014/062409

(56) References cited:
- JP-A- 2008 291 154
- US-A- 3 218 288
- US-A1- 2004 087 681
- US-B1- 6 638 567

## Description

This invention relates to epoxy resins hardened with nadic anhydride-type hardeners.

Epoxy resins are widely used as adhesives and structural polymers. They are widely used to form polymer composites in which the cured epoxy resin forms a continuous polymer phase in which one or more reinforcing materials are distributed.

Epoxy resins are made by mixing and then curing low molecular weight precursors. The precursors include one or more epoxy resins, and one or more hardener compounds. The epoxy resins are compounds that contain two or more curable oxirane groups per molecule. The hardeners are compounds that react at least difunctionally with epoxy groups, in each case opening the epoxide ring and forming a covalent bond to the ring-opened species, thereby extending the polymer chain. Useful hardeners include primary and/or secondary amine compounds, polyisocyanates, polyphenolic compounds, aliphatic polyalcohols and carboxylic acid anhydrides.

One class of useful carboxylic acid anhydrides are based on the norbornene (bicyclo[2.2.1]-5-heptene) structure. Among these are cis-5-norbornene-2,3-dicarboxylic anhydride (which can take the exo or endo configurations) and methyl-5-norbornene-2,3-dicarboxylic anhydride, each of which is commercially available. These norbornene-based anhydrides tend to cure rapidly with epoxy resins to produce cured polymers having high glass transition temperatures. As such, epoxy resin systems based on these hardeners are potentially useful for making fiber-reinforced composites, among other things.

Despite these potential advantages, the adoption of norbornene-based anhydride hardeners into industrial applications is being inhibited by the strong odor of these products. Commercially-available norbornene-based anhydrides have a strong odor which is believed to be due at least in part to impurities, possibly cyclopentadiene, dicyclopentadiene or similar compounds. The strong odor is unpleasant to workers and may require extensive ventilation. Worse still, the odor remains with the cured resin. Parts produced using norbornene-based anhydrides tend to have a strong, unpleasant smell. This makes the parts unsuitable for most indoor uses and for other uses (such as producing many automotive parts) in which the part will be in close proximity to humans.

Therefore, a method is desired by which the odor of epoxy resin systems cured with norbornene-based anhydride compounds can be reduced.

Applicants have discovered that the problem of odor in epoxy resins cured with norbornene-based anhydride hardeners is greatly mitigated when the epoxy resin is cured in the presence of a core-shell rubber. The presence of the core-shell rubber unexpectedly leads to a dramatic decrease in odor in the finished part.

Therefore, in one aspect, this invention is a process for forming a thermoset, comprising mixing at least one epoxy resin with a hardener component to form a reaction mixture, wherein the hardener component includes at least one norbornene-based dicarboxylic anhydride and at least one core-shell rubber blended into said norbornene-based dicarboxylic anhydride prior to forming the reaction mixture, and b) curing the reaction mixture in the presence of the catalyst to form the thermoset.

The invention is also a hardener composition comprising at least one norbornene-based dicarboxylic anhydride and at least one core-shell rubber blended into said norbornene-based dicarboxylic anhydride, wherein the said at least one norbornene-based dicarboxylic anhydride constitutes at least 50% by weight of all hardeners. Cured epoxy resins made in accordance with the invention have surprisingly low odor, despite the use of the norbornene-based dicarboxylic anhydride as a hardener. The reduction in odor (compared to the otherwise like case in which the core-shell rubber is absent) is very dramatic and significant, which is quite surprising in that the parts often will become exposed to elevated temperatures during cure (from, for example applied heat or the exotherm generated in the curing reaction), yet the odor-causing compounds are in some manner largely prevented from being released from the cured resin and do not create strong odors in the cured parts.

In addition, the presence of the core-shell rubber in the cured thermoset provides a toughening effect that is manifested by an increase in one or more of elongation, tensile modulus and fracture toughness, compared to when the core-shell rubber is omitted. However, the extent of improvement is quite unexpected. In at least some epoxy systems, the core-shell rubber provides a much greater increase in elongation, tensile modulus and/or fracture toughness than do other types of impact modifiers. Even more surprisingly, the presence of the core-shell rubber has almost no adverse effect on the glass transition temperature of the cured resin. In some systems, increases in glass transition temperature actually are seen. Again, this behavior is unusual and contrary to what is seen with many other toughening agents for epoxy resin systems.

The epoxy resin component contains one or more epoxy resins, by which it is meant compounds having an average of about two or more epoxide groups per molecule that are curable by reaction with an anhydride hardener compound. The epoxy resin component may contain a mixture of two or more different epoxy resins. Individual epoxy resins may contain, for example, 2 to 20, preferably 2 to 8 epoxy groups, more preferably 2 to 6 epoxy groups, per molecule and have an epoxy equivalent weight of 75 to 500 or more, preferably 75 to 250. When a mixture of epoxy resins is present, the mixture preferably has an average of 2 to 6, preferably 2 to 4, more preferably 2 to 3 epoxy groups per molecule and an average epoxy equivalent weight of 75 to 250, preferably 100 to 225, still more preferably 125 to 200.

Among the useful epoxy resins are, for example, cycloaliphatic epoxides; polyglycidyl ethers of polyphenols, polyglycidyl ethers of polyglycols; epoxy novolac resins including cresol-formaldehyde novolac epoxy resins, phenol-formaldehyde novolac epoxy resins and bisphenol A novolac epoxy resins; divinylarene dioxides, tris(glycidyloxyphenyl)methane; tetrakis(glycidyloxyphenyl)ethane; tetraglycidyl diaminodiphenylmethane; oxazolidone-containing compounds as described in U. S. Patent No. 5,112,932; and advanced epoxy-isocyanate copolymers such as those sold commercially as D.E.R.™ 592 and D.E.R.™ 6508 (The Dow Chemical Company). Still other useful epoxy resins are described, for example, in WO 2008/140906.

Other suitable epoxy resins include polyglycidyl ethers of aliphatic polyols, including, for example, the polyglycidyl ethers of ethylene glycol, diethylene glycol, triethylene glycol, 1,2-propane diol, dipropylene glycol, tripropylene glycol, 1,4-butane diol, 1,6-hexane diol, glycerin, trimethylolpropane, trimethylolethane and polyether polyols having a weight of up to 2000 grams/mole.

Useful cycloaliphatic epoxides are compounds that include a saturated carbon ring having an epoxy oxygen bonded to two vicinal atoms in the carbon ring, as illustrated by the following structure II: 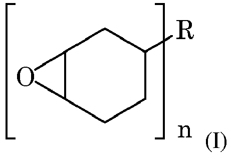 wherein R is a linking group and n is a number from 2 to 10, preferably from 2 to 4 and more preferably 2 to 3. Di- or polyepoxides are formed when n is 2 or more. The cycloaliphatic epoxy resin may have an epoxy equivalent weight of about 95 to 250, especially from about 100 to 150. Mixtures of mono-, di- and/or polyepoxides can be used. Cycloaliphatic epoxy resins as described in U.S. Patent No. 3,686,359, incorporated herein by reference, may be used in the present invention. Cycloaliphatic epoxy resins of particular interest are (3,4-epoxycyclohexyl-methyl)-3,4-epoxy-cyclohexane carboxylate, bis-(3,4-epoxycyclohexyl) adipate and mixtures thereof.

Useful epoxy novolac resins can be generally described as methylene-bridged polyphenol compounds, in which some or all of the phenol groups are capped with an epoxy-containing group, typically by reaction of the phenol groups with epichlorohydrin to produce the corresponding glycidyl ether. The phenol rings may be unsubstituted, or may contain one or more substituent groups, which, if present are preferably alkyl having up to six carbon atoms and more preferably methyl. The epoxy novolac resin may have an epoxy equivalent weight of about 156 to 300, preferably about 170 to 225 and especially from 170 to 190. The epoxy novolac resin may contain, for example, from 2 to 10, preferably 3 to 6, more preferably 3 to 5 epoxide groups per molecule. Among the suitable epoxy novolac resins are those having the general structure: 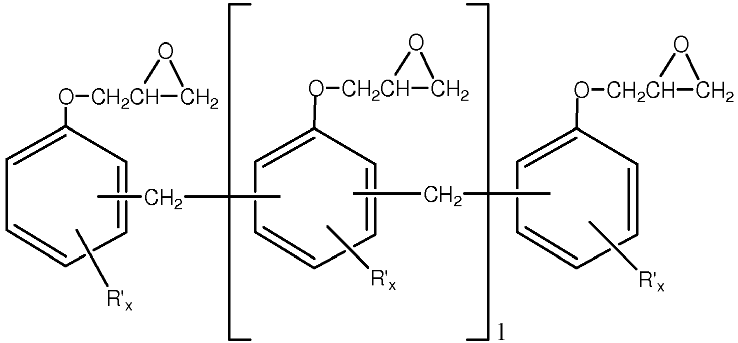 in which 1 is 0 to 8, preferably 1 to 4, more preferably 1 to 3, each R' is independently alkyl or inertly substituted alkyl, and each x is independently 0 to 4, preferably 0 to 2 and more preferably 0 to 1. R' is preferably methyl if present.

Useful polyglycidyl ethers of a polyphenol (other than an epoxy novolac as described before), include diglycidyl ethers of a diphenol such as, for example, resorcinol, catechol, hydroquinone, bisphenol, bisphenol A, bisphenol AP (1,1-bis(4-hydroxylphenyl)-1-phenyl ethane), bisphenol F, bisphenol K, tetramethylbiphenol, or mixtures of two or more thereof. The polyglycidyl ether of the polyphenol may be partially advanced.

Suitable polyglycidyl ethers of polyphenols include those represented by structure (I) 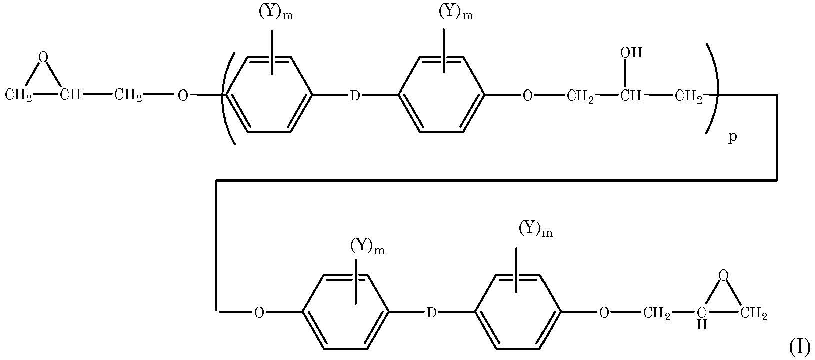 wherein each Y is independently a halogen atom, each D is a divalent hydrocarbon group suitably having from 1 to about 10, preferably from 1 to about 5, more preferably from 1 to about 3 carbon atoms, -S-, -S-S-, -SO-, -SO₂,-CO₃. -CO- or -O-, each m may be 0, 1, 2, 3 or 4 and p is a number such that the compound has an epoxy equivalent weight of up to 250, preferably from 170 to 250 and more preferably from 170 to 200. p typically is from 0 to 1, especially from 0 to 0.5.

Useful divinylarene dioxides are compounds having the general structure: 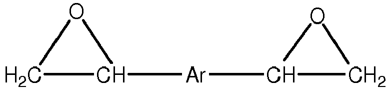 wherein Ar is an aromatic group. Ar may be a single-ring, fused ring or a multi-ring structure in which the rings are connected by one or more covalent bonds (as in biphenyl) and/or a bridging group such as a divalent hydrocarbon group having from 1 to about 10, preferably from 1 to about 5, more preferably from 1 to about 3 carbon atoms, -S-, -S-S-, -SO-, -SO₂,-CO₃₋ -CO- or -O-. The Ar group may contain one or more inert substituents in addition to the epoxy groups, "inert" meaning that the substituent group(s) do not include epoxide groups or epoxide-reactive groups. Ar is preferably phenylene or naphthalene and most preferably phenylene, in which case the compound is divinylbenzene dioxide. The epoxide groups may be in any positional relationship to each other. When Ar is phenylene, the epoxide groups may be in the ortho, meta- or para positions with respect to each other.

In some embodiments, the epoxy resin component is a mixture of at least one cycloaliphatic epoxy resin and at least one divinylarene dioxide. In other specific embodiments, the epoxy resin component is a mixture of at least one cycloaliphatic epoxy resin, at least one divinylarene dioxide and at least one epoxy novolac resin. In other specific embodiments, the epoxy resin component is a mixture of at least one cycloaliphatic epoxy resin, at least one divinylarene dioxide and at least one diglycidyl ether of a bisphenol. In other specific embodiments, the epoxy resin component includes a mixture of at least one cycloaliphatic epoxy resin, at least one divinylarene dioxide, at least one epoxy novolac resin and at least one diglycidyl ether of a bisphenol.

The hardener in this invention includes at least one norbornene-based dicarboxylic anhydride. The norbornene-based dicarboxylic anhydride includes compounds such as those represented by the structure: 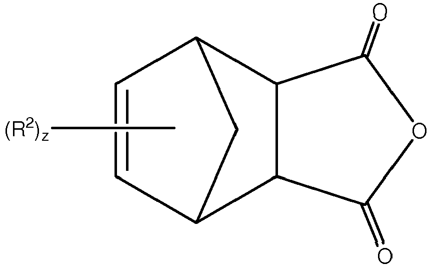 wherein each R² is hydrocarbyl, halogen or inertly substituted hydrocarbyl. By "inertly substituted", it is meant the substituent does not adversely affect the ability of the anhydride group to react with and cure the epoxy resin. z may be from zero to 8, and is preferably 0 to 2 and more preferably 0 or 1. R², if present, preferably is alkyl, more preferably methyl. In the case where z is 1 or more, at least one R² group preferably is attached to the 5-carbon. In norbornene-based dicarboxylic anhydrides, the dicarboxylic anhydride group can be in the exo or endo conformation. In this invention, both the exo and endo conformations are useful, as are mixtures thereof. The most preferred norbornene-based dicarboxylic anhydrides are bicyclo[2.2.1]-5-heptene-2,3-dicarboxylic anhydride (nadic anhydride, *i.e*., an anhydride of the foregoing structure in which z is zero), bicyclo [2.2.1]-methylhept-5-ene-2,3-dicarboxylic anhydride (methyl nadic anhydride, *i.e*., an anhydride of the forgoing structure in which R² is methyl and z is one. In the latter case, the methyl group preferably is bonded to the 5 carbon atom. As the problem with odor becomes greater with increasing norbornene-based dicarboxylic anhydride content, the invention has particular benefits when such anhydride constitutes at least 50%, at least 75%, at least 90% or even at least 95% by weight of all hardeners.

Examples of other hardeners that can be used together with the norbornene-based dicarboxylic anhydride include other aliphatic anhydrides such as hexahydrophthalic anhydride, tetrahydrophthalic anhydride, methyl tetrahydrophthalic anhydride, methyl hexahydrophthalic anhydride and mixtures of any two or more thereof. Examples of aromatic anhydrides may include, for example, phthalic anhydride, trimellitic anhydride and mixtures thereof. Copolymers of styrene and maleic anhydride and other anhydrides copolymerizable with styrene such as those described, for example, in U.S. Patent No. 6,613,839, incorporated herein by reference, also are useful anhydride hardeners.

The hardener component contains a core-shell rubber. The core-shell rubber is a particulate characterized in having at least one internal rubbery region (the "core") and at least one external shell layer. The core shell rubber may have a particle size in the range of from 0.01 µm to 0.8 µm. A preferred particle size is from 0.05 µm to 0.5 µm, and a more preferred particle size is from 0.08 µm to 0.30 µm.

The rubbery core is a material that has a glass transition temperature of no greater than -20°C, preferably no greater than -35°C. Examples of suitable core materials are polymers or copolymers of acrylic esters, conjugated diene monomers, siloxane type monomers and combinations thereof. Preferred cores are polymers of copolymers of one or more acrylic esters and/or one or more conjugated diene monomers having a glass transition temperature of no greater than -35°C.

The shell layer preferably has a glass transition temperature of at least 40°C, preferably at least 70°C and more preferably at least 90°C. The shell layer may be grafted or otherwise covalently bonded to the core. The shell layer may or may not have functional groups that are reactive towards the epoxy resin or the hardener. The shell layer may be, for example, a polymer or copolymer of an alkyl(meth)acrylate ester such as methyl(meth)acrylate, ethyl(meth)acrylate, butyl(meth)acrylate, and 2-ethylhexyl(meth)acrylate, an aromatic vinyl compounds such as styrene, α-methylstyrene, an alkylsubstituted styrene or an halogen-substituted styrene such as bromo styrene or chloro styrene, or a vinyl cyanate compound such as (meth)acrylonitrile and substituted (meth)acrylonitrile. Preferred shells are polymers and copolymers of methyl methacrylate having a glass transition temperature (by DMA) of at least 90°C.

The core-shell rubber may include one or more layers intermediate to the shell and core.

The weight ratio of the core layer to the shell layer may be, for example, in the range from 40:60 to 95:5, in the range of 50:50 to 95:5, or in the range of from 60:40 to 85:15.

Examples of useful core-shell rubbers include commercially available materials such as Paraloid™ EXL 2300G, EXL 2650A, EXL 2655, EXL2691 A, all available from The Dow Chemical Company, Kane Ace® MX products from Kaneka Corporation, such as Kane Ace® MX 120, MX 125, MX 130, MX 136, MX 551, or METABLEN SX-006 available from Mitsubishi Rayon.

Typically, the core-shell rubber will constitute 1 to 35% of the weight of the cured epoxy resin. A preferred amount is 6 to 25% of the total weight of the cured resin and a more preferred amount is 8 to 20% of the total weight of the cured resin. The weight of the cured resin is considered to be the combined weight of epoxy resin(s), hardener(s), core-shell rubber, and other ingredients other than particulate fillers and reinforcing fibers as may be present.

The hardener component may contain, for example 2 to 60%, preferably 5 to 50%, more preferably 6 to 40% and still more preferably 6 to 35% of core-shell rubber, based on the combined weight of core-shell rubber and hardener(s).

In some cases, the viscosity of the hardener component may become very high if large amounts of core-shell rubber are incorporated into it. This can cause handling problems and may also cause the hardener component to mix poorly with the epoxy resin(s) (due to large difference in their respective viscosities). Accordingly a portion of the core-shell rubber may be incorporated into the epoxy resin(s) if desired, prior to forming the reaction mixture.

The hardener and epoxy resin may be provided in amounts that provide, for example, 0.5 to 2, preferably 0.8 to 1.5 and more preferably 0.8 to 1.25 equivalents of epoxy groups per equivalents of epoxy-reactive groups in the hardener. Since an anhydride group reacts with two epoxy groups, a mole of anhydride compound is considered for purposes of this invention to provide two equivalents of epoxy reactive groups. A primary amino group also reacts with two epoxy groups, and each mole of primary amine groups is considered to provide two equivalents of epoxy-reactive groups for purposes of this invention.

The curing of the epoxy resin and hardener is performed in the presence of an effective amount of at least one catalyst. Typically, the catalyst is formulated into either the epoxy resin component or the hardener component, or into both.

Among the suitable catalysts are various tertiary amines. Suitable tertiary amine catalysts include tertiary aminophenol compounds, benzyl tertiary amine compounds, imidazole compounds, or mixtures of any two or more thereof. Tertiaryaminophenol compounds contain one or more phenolic groups and one or more tertiary amino groups. Examples of tertiary aminophenol compounds include mono-, bis- and tris(dimethylaminomethyl)phenol, as well as mixtures of two or more of these. Benzyl tertiary amine compounds are compounds having a tertiary nitrogen atom, in which at least one of the substituents on the tertiary nitrogen atom is a benzyl or substituted benzyl group. An example of a useful benzyl tertiary amine compound is N,N-dimethyl benzylamine.

Imidazole compounds contain one or more imidazole groups. Examples of imidazole compounds include, for example, imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-undecylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']ethyl-s-triazine, 2,4-diamino-6-[2'-ethylimidazolyl-(1)']ethyl-s-triazine, 2,4-diamino-6-[2'-undecylimidazolyl-(1)']ethyl-s-triazine, 2-methylimidazolium-isocyanuric acid adduct, 2-phenylimidazolium-isocyanuric acid adduct, 1-aminoethyl-2-methylimidazole, 2-phenyl-4,5-dihydroxylmethylimidazole, 2-phenyl-4-methyl-5-hydroxymethylimidazole, 2-phenyl-4-benzyl-5-hydroxymethylimidazole, and compounds containing two or more imidazole rings obtained by dehydrating any of the foregoing imidazole compounds or condensing them with formaldehyde.

Other suitable catalysts include various those described in, for example, U.S. Patent Nos. 3,306,872, 3,341,580, 3,379,684, 3,477,990, 3,547,881, 3,637,590, 3,843,605, 3,948,855, 3,956,237, 4,048,141, 4,093,650, 4,131,633, 4,132,706, 4,171,420, 4,177,216, 4,302,574, 4,320,222, 4,358,578, 4,366,295, and 4,389,520, and WO 2008/140906, all incorporated herein by reference. A particularly useful catalyst mixture is a mixture of an imidazole catalyst and a metallic catalyst. Examples of such metallic catalysts include chromium (III) complexes such as oxo-centered trinuclear chromium (III) complexes such as Hycat™ 2000S, Hycat™ 3000S and Hycat™ OA catalysts (Dimensional Technology Chemical Systems, Inc.)

The catalyst is present in a catalytically effective amount. A suitable amount is typically from about 0.1 to about 10 parts by weight of catalyst(s) per 100 parts by weight of epoxy resin(s). A preferred amount is from 1 to 5 parts of catalyst(s) per 100 parts by weight of epoxy resin(s).

The reaction of the epoxy resin and hardener(s) may be performed in the presence of other materials in addition to those described above. Such additional materials may include, for example, various additional impact modifiers, one or more catalysts, one or more colorants, one or more include solvents or reactive diluents, pigments, antioxidants, preservatives, non-fibrous particulate fillers (including micron- and nano-particles), wetting agents and the like. These materials may be incorporated into the epoxy resin component, the hardener component, or both.

In certain embodiments, the epoxy resin component and hardener are cured in the presence of reinforcing fibers to form a composite. The reinforcing fibers are thermally stable and have a high melting temperature, such that the reinforcing fibers do not degrade or melt during the curing process. Suitable fiber materials include, for example, glass, quartz, polyamide resins, boron, carbon, wheat straw, hemp, sisal, cotton, bamboo and gel-spun polyethylene fibers.

The reinforcing fibers can be provided in the form of short (0.5 to 15 cm) fibers, long (greater than 15 cm) fibers or continuous rovings. The fibers can be provided in the form of a mat or other preform if desired; such mats or performs may in some embodiments be formed by entangling, weaving, stitching the fibers, or by binding the fibers together using an adhesive binder. Preforms may approximate the size and shape of the finished composite article (or portion thereof that requires reinforcement). Mats of continuous or shorter fibers can be stacked and pressed together, typically with the aid of a tackifier or binder, to form preforms of various thicknesses, if required.

Suitable tackifiers for preparing performs (from either continuous or shorter fibers) include heat-softenable polymers such as described, for example, in U. S. Patent Nos. 4,992,228, 5,080,851 and 5,698,318. The tackifier should be compatible with and/or react with the polymer phase of the composite, so that there is good adhesion between the polymer and reinforcing fibers. A heat-softenable epoxy resin or mixture thereof with a hardener, as described in U. S. Patent No. 5,698,318, is especially suitable. The tackifier may contain other components, such as one or more catalysts, a thermoplastic polymer, a rubber, or other modifiers.

A sizing or other useful coating may be applied onto the surface of the fibers before they are introduced into the mold. A sizing often promotes adhesion between the cured epoxy resin and the fiber surfaces. The sizing in some embodiments may also have a catalytic effect on the reaction between the epoxy resin and the hardener.

Among the useful optional ingredients is an internal mold release agent, which may constitute up to 5%, more preferably up to about 1%, of the combined weight of the epoxy resin component and the hardener mixture. Suitable internal mold release agents are well known and commercially available, including those marketed as Marbalease™ by Rexco-USA, Mold-Wiz™ by Axel Plastics Research Laboratories, Inc., Chemlease™ by Chem-Trend, PAT™ by Würtz GmbH, Waterworks Aerospace Release by Zyvax and Kantstik™ by Specialty Products Co. In addition to (or instead of) adding the internal mold release agent at the mixhead, it is also possible to combine such an internal mold release agent into the resin component and/or the hardener before the resin component and the hardener are brought together.

Other optional components that can be present include solvents or reactive diluents, pigments, antioxidants, preservatives, impact modifiers, non-fibrous particulate fillers including micron- and nano-particles, wetting agents and the like.

The solvent is a material in which the epoxy resin, hardener or both, are soluble. The solvent is not reactive with the epoxy resin(s) or the hardener under the conditions of the polymerization reaction. The solvent (or mixture of solvents, if a mixture is used) preferably has a boiling temperature that is at least equal to and preferably higher than the curing temperature. Suitable solvents include, for example, glycol ethers such as ethylene glycol methyl ether and propylene glycol monomethyl ether; glycol ether esters such as ethylene glycol monomethyl ether acetate and propylene glycol monomethyl ether acetate; poly(ethylene oxide) ethers and poly(propylene oxide) ethers; polyethylene oxide ether esters and polypropylene oxide ether esters; amides such as N,N-dimethylformamide; aromatic hydrocarbons toluene and xylene; aliphatic hydrocarbons; cyclic ethers; halogenated hydrocarbons; and mixtures thereof. It is preferred to omit a solvent. If used, the solvent may constitute up to 75% of the weight of the reaction mixture (not including the reinforcing fiber), more preferably up to 30% of the weight of the mixture. Even more preferably the reaction mixture contains no more than 5% by weight of a solvent and most preferably contains less than 1% by weight of a solvent.

Suitable additional impact modifiers include natural or synthetic polymers having a T_{g} of lower than -40°C. These include natural rubber, styrene-butadiene rubbers, polybutadiene rubbers, isoprene rubbers, polyethers such as poly(propylene oxide), poly(tetrahydrofuran) and butylene oxide-ethylene oxide block copolymers, and the like.

Suitable particulate fillers have an aspect ratio of less than 5, preferably less than 2, and do not melt or thermally degrade under the conditions of the curing reaction. Suitable fillers include, for example, glass flakes, aramid particles, carbon black, carbon nanotubes, various clays such as montmorillonite, and other mineral fillers such as wollastonite, talc, mica, titanium dioxide, barium sulfate, calcium carbonate, calcium silicate, flint powder, carborundum, molybdenum silicate, sand, and the like. Some fillers are somewhat electroconductive, and their presence in the composite can increase the electroconductivity of the composite. In some applications, notably automotive applications, it is preferred that the composite is sufficiently electroconductive that coatings can be applied to the composite using so-called "e-coat" methods, in which an electrical charge is applied to the composite and the coating becomes electrostatically attracted to the composite. Conductive fillers of this type include metal particles (such as aluminum and copper), carbon black, carbon nanotubes, graphite and the like.

Thermosets are formed from the epoxy resin system of the invention by mixing the epoxy resin and hardener component and allowing the resulting mixture to cure in the presence of the catalyst. Either or both of the components can be preheated if desired before they are mixed with each other. It is generally preferred to heat the mixture to an elevated temperature, such as from 60 to 180°C, especially from 120 to 170°C, to accelerate the cure.

The curable epoxy resin system of the invention is particularly useful for making fiber-reinforced composites by curing the system in the presence of reinforcing fibers as described before. These composites are in general made by mixing the epoxy resin with the hardener component to form a mixture, wetting the fibers with the mixture, and then curing the mixture in the presence of the catalyst and the reinforcing fibers. It is also possible to first wet the reinforcing fibers with either the epoxy resin component or the hardener (such as by dispersing the fibers into them) and then mixing the epoxy resin component with the hardener. Another alternative is to mix the epoxy resin component and the hardener in the presence of the reinforcing fibers.

The curing step may be performed in a mold. In such a case, the reinforcing fibers may be introduced into the mold before the epoxy resin/hardener mixture. This is normally the case when a fiber preform is used. The fiber preform is placed into the mold and the epoxy resin/hardener mixture is then injected into the mold, where it penetrates between the fibers in the preform and then cures to form a composite product.

Alternatively, the fibers (including a preform) can be deposited into an open mold, and the reaction mixture can be sprayed or injected onto the preform and into the mold. After the mold is filled in this manner, the mold is closed and the reaction mixture cured.

Short fibers can be injected into the mold with the hot reaction mixture. Such short fibers may be, for example, blended with the epoxy resin or hardener (or both), prior to forming the reaction mixture. Alternatively, the short fibers may be added into the reaction mixture at the same time as the epoxy and hardener are mixed, or afterward but prior to introducing the hot reaction mixture into the mold.

Alternatively, short fibers can be sprayed into a mold. In such cases, the reaction mixture can also be sprayed into the mold, at the same time or after the short fibers are sprayed in. When the fibers and reaction mixture are sprayed simultaneously, they can be mixed together prior to spraying. Alternatively, the fibers and reaction mixture can be sprayed into the mold separately but simultaneously. In a process of particular interest, long fibers are chopped into short lengths and the chopped fibers are sprayed into the mold, at the same time as or immediately before the hot reaction mixture is sprayed in.

Composites made in accordance with the invention may have fiber contents of at least 10 volume percent, preferably at least 25 volume percent or at least 35 volume percent, up to 80 volume percent, preferably up to 70 volume percent, more preferably up to 60 volume percent.

The mold may contain, in addition to the reinforcing fibers, one or more inserts. Such inserts may function as reinforcements, and in some cases may be present for weight reduction purposes. Examples of such inserts include, for example, wood, plywood, metals, various polymeric materials, which may be foamed or unfoamed, such as polyethylene, polypropylene, another polyolefin, a polyurethane, polystyrene, a polyamide, a polyimide, a polyester, polyvinylchloride and the like, various types of composite materials, and the like, that do not become distorted or degraded at the temperatures encountered during the molding step.

The reinforcing fibers and core material, if any, may be enclosed in a bag or film such as is commonly used in vacuum assisted processes.

The mold and the preform (and any other inserts, if any) may be heated to the curing temperature or some other useful elevated temperature prior to contacting them with the reaction mixture. The mold surface may be treated with an external mold release agent, which may be solvent or water-based.

The particular equipment that is used to mix the components of the reaction mixture and transfer the mixture to the mold is not considered to be critical to the invention, provided the reaction mixture can be transferred to the mold before it attains a high viscosity or develops significant amounts of gels. The process of the invention is amenable to RTM, VARTM, RFI and SCRIMP processing methods and equipment (in some cases with equipment modification to provide the requisite heating at the various stages of the process), as well as to other methods.

The mixing apparatus can be of any type that can produce a highly homogeneous mixture of the epoxy resin and hardener (and any optional components that are also mixed in at this time). Mechanical mixers and stirrers of various types may be used. Two preferred types of mixers are static mixers and impingement mixers.

In some embodiments, the mixing and dispensing apparatus is an impingement mixer. Mixers of this type are commonly used in so-called reaction injection molding processes to form polyurethane and polyurea moldings. The epoxy resin and hardener (and other components which are mixed in at this time) are pumped under pressure into a mixing head where they are rapidly mixed together. Operating pressures in high pressure machines may range from 1,000 to 29,000 psi or higher (6.9 to 200 MPa or higher), although some low pressure machines can operate at significantly lower pressures. The resulting mixture is then preferably passed through a static mixing device to provide further additional mixing, and then transferred into the mold cavity. The static mixing device may be designed into the mold. This has the advantage of allowing the static mixing device to be opened easily for cleaning.

In certain specific embodiments, the epoxy resin and hardener component are mixed as just described, by pumping them under pressure into a mixing head. Impingement mixing may be used. The catalyst is introduced with the epoxy resin, the hardener, or as a separate stream. The operating pressure of the incoming epoxy resin and hardener streams may range from a somewhat low value (for example, from about 1 to about 6.9 MPa) or a high value (such as, for example, from 6.9 to 200 MPa). The resulting mixture of epoxy resin, hardener and catalyst is then introduced into the mold at a somewhat low operating pressure, such as up to 5 MPa or up to about 1.035 MPa). In such embodiments, the mixture of epoxy resin, hardener and catalyst is typically passed through a static mixer before entering the mold. Some or all of the pressure drop between the mixhead and the mold injection port often will take place through such a static mixer. An especially preferred apparatus for conducting the process is a reaction injection molding machine, such as is commonly used to processes large polyurethane and polyurea moldings. Such machines are available commercially from Krauss Maffei Corporation and Cannon or Hennecke.

In other embodiments, the reaction mixture is mixed as before, and then sprayed into the mold. Temperatures are maintained in the spray zone such that the temperature of the hot reaction mixture is maintained as described before.

The mold is typically a metal mold, but it may be ceramic or a polymer composite, provided that the mold is capable of withstanding the pressure and temperature conditions of the molding process. The mold contains one or more inlets, in liquid communication with the mixer(s), through which the reaction mixture is introduced. The mold may contain vents to allow gases to escape as the reaction mixture is injected.

The mold is typically held in a press or other apparatus which allows it to be opened and closed, and which can apply pressure on the mold to keep it closed during the filling and curing operations. The mold or press is provided with means by which heat or cooling can be provided.

In some embodiments of the foregoing process, the molded composite is demolded in no more than 5 minutes, preferably from 3 to 5 minutes, after the start of injection of the epoxy resin system into the mold.

The process of the invention is useful to make a wide variety of composite products, including various types of automotive parts. Examples of these automotive parts include vertical and horizontal body panels, automobile and truck chassis components, and so-called "body-in-white" structural components.

Body panel applications include fenders, door skins, hoods, roof skins, decklids, tailgates and the like. Body panels often require a so-called "class A" automotive surface which has a high distinctness of image (DOI). For this reason, the filler in many body panel applications will include a material such as mica or wollastonite.

Parts made in accordance with this invention may be in some cases subjected to high temperatures. For example, certain protective coatings as are commonly used in automotive manufacturing processes often are applied electrostatically in a so-called "e-coat" process, and then subjected to a bake cure. In such a bake cure, the composite may be subject to a temperature of 140 to 180°C, for a period of 10 to 60 minutes. Epoxy resins and composites made in accordance with this invention which are to be coated in such a manner should have a glass transition temperature in excess of the bake temperature, preferably at least 200°C. In addition, an electroconductive filler may be incorporated into the composite to increase the electrical conductivity of the part, to facilitate the electrodeposition process.

The following examples are provided to illustrate the invention, but not limit the scope thereof. All parts and percentages are by weight unless otherwise indicated.

### Examples 1-2 and Comparative Samples A and B

Resin transfer molding is used to make a composite. The machine is a Krauss-Maffei highpressure RIM Star RTM 4/4. The mold has internal dimensions of 620 mm X 460 mm by 22 mm, with a central injection point and two venting points. The internal surfaces of the mold are treated with an external mold release. A carbon fiber preform (Panex™ 35 from Zoltek) having a weight of 330 g/qm is inserted into the mold. The preform and both halves of the mold are heated to 160°C. A vacuum is drawn on the mold prior to injecting the epoxy resin system. The hardener component is preheated to 40°C and the epoxy resin component is preheated to 80°C. The hardener and epoxy resin component are impingement mixed at a weight ratio of 100:153 (Example 1), and 325 grams of the mixture then injected into the mold over 25 seconds. The part is demolded after 4 minutes. The polymer phase of the composite has a glass transition temperature of 213°C.

When this experiment is repeated (Ex. 2) with a three minute demold time, the polymer phase of the composite has a glass transition temperature of 214°C. These results indicate that a suitable demold time for this system is three minutes or less. The parts have very low odor.

The epoxy resin component used in Examples 1 and 2 is a mixture of 55.62 parts (3,4-epoxycyclohexyl-methyl)-3,4-epoxy-cyclohexane carboxylate (Synasia™ 21) 11.92 parts of an epoxy novolac resin (D.E.N 438, from The Dow Chemical Company), 11.92 parts of a diglycidyl ether of bisphenol A (D.E.R. 331 from The Dow Chemical Company) and 20.54 parts of divinylbenzene dioxide (95% pure, epoxy equivalent weight 81). The hardener composition is a mixture of 85.01 parts nadic methyl anhydride (Dixie Chemicals), 11.41 parts of a core-shell rubber (Paraloid 2650A), 1.79 parts 1-methyl imidazole and 1.79 parts of Hycat-3000S chromium catalyst.

For comparison, Examples 1 and 2 are repeated to produce Comparative Samples A and B, respectively, except the toughener is a mixture of 77.9 parts nadic methyl anhydride and with 22.1 parts of a poly(propylene oxide) toughener (VORANOL^{™} 4000 LM, from The Dow Chemical Company. The resin/hardener ratio is increased to 100:182 to reflect the higher toughener content in the hardener component. The glass transition temperature for the sample cured at 4 minutes is only 200; that cured for 3 minutes is only 203°C. The part produced in each of these experiments emits a strong cyclopentadiene-type odor, despite the fact that the hardener in this formulation contains nearly double the concentration of toughener.

### Examples 3-4

Examples 1 and 2 are repeated, except the epoxy resin composition is changed and the ratio of resin to hardener is 100:131. The resulting composites are designated Examples 3 and 4, respectively. The epoxy resin composition used to make Examples 3 and 4 is a mixture of 70 parts (3,4-epoxycyclohexyl-methyl)-3,4-epoxy-cyclohexane carboxylate (Synasia™ 21) 15 parts of an epoxy novolac resin (D.E.N 438, from The Dow Chemical Company) and 15 parts of a diglycidyl ether of bisphenol A (D.E.R. 331 from The Dow Chemical Company).

Examples 3 and 4 exhibit glass transition temperatures of 219 and 212°C, respectively, and each part has very low odor.

### Example 5 and Comparative Samples C-E

An epoxy resin component is prepared by mixing 20 parts of (3,4-epoxycyclohexyl-methyl)-3,4-epoxy-cyclohexane carboxylate (Synasia™ 21) 4.3 parts of an epoxy novolac resin (D.E.N 438, from The Dow Chemical Company), 4.3 parts of a diglycidyl ether of bisphenol A (D.E.R. 383 from The Dow Chemical Company) and 7.4 parts of divinylbenzene dioxide (95% pure, epoxy equivalent weight 81).

To make Example 5, the foregoing epoxy resin component is cured with a hardener composition that contains 74.6 parts nadic methyl anhydride (Dixie Chemicals), 22 parts of a core-shell rubber (Paraloid™2650A), 1.7 parts 1-methyl imidazole and 1.7 parts of Hycat-3000S chromium catalyst. The epoxy resin component and hardener components are mixed at room temperature on a high speed laboratory mixture until homogeneous (about 1 minute). The ratios of the components are such to provide about 1.05 epoxy groups per anhydride group. A portion of the mixture is poured into a preheated (160°C) aluminum plaque mold treated with an external mold release agent. The mold is positioned in a 160°C oven as the mixture is poured. After pouring the mixture, the oven is closed and the part cured for 5 minutes, after which the resulting part is immediately demolded. Specimens of the cured plaque are evaluated for glass transition temperature (by dynamic mechanical thermal analysis (DMTA), tensile modulus and elongation (ASTM D638 Type I), fracture toughness (ASTM D-5045), coefficient of thermal expansion (by thermomechanical analysis).

Another portion of the mixture is poured onto a 160°C hot plate that has been sanded clean, wiped with acetone and coated with an external mold release agent. A line is cut on the surface of the curing mixture periodically to assess gel time, as described before. Cure time is evaluated by periodically attempting to remove the curing mixture from the hot plate surface. The cure time is the time at which the part can be removed without permanent damage or distortion.

Results of this testing are indicated in Table 1.

Comparative Samples C, D and E are made in the same manner, except that in each case the toughener is replaced with an equal weight of another impact modifier. For Comparative Sample C, the impact modifier is a commercial polymer toughener (Fortegra™ 100 from The Dow Chemical Company). For Comparative Sample D, the toughener is a 6000 molecular weight polyether triol. For Comparative Sample E, the toughener is a 4000 molecular weight polyether diol.

**Table 1**

| Test | Ex. 5 | Comp. C | Comp. D | Comp. E |
|---|---|---|---|---|
| Gel time, s | 60-75 | 60-75 | 60-75 | 60-75 |
| Demold time, s | 160 | 240 | 220 | 180 |
| Glass transition temperature, °C | 228 | 221 | 214 | 217 |
| Tensile Modulus, MPa | 2550 | 1900 | 2000 | 1950 |
| Elongation, % | 5 | 5 | 5 | 5 |
| Fracture Toughness, MPa-√m | 1.6 | 0.83 | 0.72 | 0.82 |
| Coefficient of Thermal Expansion, ppm/°C | 98 | 122 | 120 | 122 |

As seen from the data in Table 1, the cured resin made with the core-shell rubber has very significantly higher glass transition temperature, tensile modulus and fracture modulus than the comparatives, at similar elongation.

## Claims

1. A process for forming a thermoset, comprising mixing at least one epoxy resin with a hardener component to form a reaction mixture, wherein the hardener component includes at least one norbornene-based dicarboxylic anhydride and at least one core-shell rubber blended into said norbornene-based dicarboxylic anhydride prior to forming the reaction mixture, and b) curing the reaction mixture in the presence of the catalyst to form the thermoset.

2. The process of claim 1 wherein the norbornene-based dicarboxylic anhydride is nadic anhydride, methyl nadic anhydride or a mixture thereof.

3. The process of claim 1 or 2, wherein norbornene-based dicarboxylic anhydride(s) constitute 75 to 100% of the epoxy hardeners in the hardener component.

4. The process of any preceding claim, wherein the hardener component contains 6 to 35% by weight of the core-shell rubber, based on the combined weight of core-shell rubber and hardener(s).

5. The process of any preceding claim, wherein the shell of the core-shell rubber is a polymer or copolymer of methyl methacrylate having a glass transition temperature of at least 90°C.

6. The process of any preceding claim, wherein the core of the core-shell rubber is a polymer or copolymer of one or more acrylic esters and/or one or more conjugated diene monomers having a glass transition temperature of no greater than -35°C.

7. The process of any preceding claim, wherein the reaction mixture is cured in the presence of reinforcing fibers to form a composite.

8. The process of claim 7, wherein the epoxy resin and the hardener component are impingement mixed by flowing them separately to an impingement mixer under an operating pressure of 1 to 200 MPa, the resulting reaction mixture is transferred into a mold that contains a fiber preform that includes the reinforcing fibers, such that the reaction mixture flows around and between the reinforcing fibers and fills the mold, and the reaction mixture then cures in the mold.

9. The process of claim 7, wherein the thermoset has a reduced odor, compared to an otherwise like thermoset in which the core-shell rubber is absent.

10. A hardener composition comprising at least one norbornene-based dicarboxylic anhydride and at least one core-shell rubber blended into said norbornene-based dicarboxylic anhydride, wherein the said at least one norbornene-based dicarboxylic anhydride constitutes at least 50% by weight of all hardeners.

11. The hardener composition of claim 10 wherein the norbornene-based dicarboxylic anhydride is nadic anhydride, methyl nadic anhydride or a mixture thereof.

12. The hardener composition of claim 10 or 11, wherein norbornene-based dicarboxylic anhydride(s) constitute 75 to 100% of the epoxy hardeners in the hardener component.

13. The hardener composition of any of claims 10-12, wherein the hardener component contains 6 to 35% by weight of the core-shell rubber, based on the combined weight of core-shell rubber and hardener(s).

14. The hardener composition of any of claims 10-13, wherein the shell of the core-shell rubber is a polymer or copolymer of methyl methacrylate having a glass transition temperature of at least 90°C.

15. The hardener composition of any of claims 10-14, wherein the core of the core-shell rubber is a polymer of copolymer of one or more acrylic esters and/or one or more conjugated diene monomers having a glass transition temperature of no greater than -35°C.

## Patentansprüche

1. Ein Verfahren zum Bilden eines Duroplasts, beinhaltend das Mischen mindestens eines Epoxidharzes mit einer Härtungsmittelkomponente zum Bilden einer Reaktionsmischung, wobei die Härtungsmittelkomponente mindestens ein Dicarbonsäureanhydrid auf Norbornenbasis und mindestens einen vor dem Bilden der Reaktionsmischung mit dem Dicarbonsäureanhydrid auf Norbornenbasis vermischten Kern-Hülle-Kautschuk umfasst, und b) das Aushärten der Reaktionsmischung in Gegenwart des Katalysators zum Bilden des Duroplasts.

2. Verfahren gemäß Anspruch 1, wobei das Dicarbonsäureanhydrid auf Norbornenbasis Nadicanhydrid, Methylnadicanhydrid oder eine Mischung davon ist.

3. Verfahren gemäß Anspruch 1 oder 2, wobei Dicarbonsäureanhydrid(e) auf Norbornenbasis 75 bis 100 % der Epoxidhärtungsmittel in der Härtungsmittelkomponente ausmacht/ausmachen.

4. Verfahren gemäß einem der vorhergehenden Ansprüche, wobei die Härtungsmittelkomponente, bezogen auf das kombinierte Gewicht von Kern-Hülle-Kautschuk und Härtungsmittel(n), zu 6 bis 35 Gew.-% den Kern-Hülle-Kautschuk enthält.

5. Verfahren gemäß einem der vorhergehenden Ansprüche, wobei die Hülle des Kern-Hülle-Kautschuks ein Polymer oder ein Copolymer von Methylmethacrylat mit einer Glasübergangstemperatur von mindestens 90 °C ist.

6. Verfahren gemäß einem der vorhergehenden Ansprüche, wobei der Kern des Kern-Hülle-Kautschuks ein Polymer oder ein Copolymer von einem oder mehreren Acrylestern und/oder einem oder mehreren konjugierten Dienmonomeren mit einer Glasübergangstemperatur von nicht mehr als -35 °C ist.

7. Verfahren gemäß einem der vorhergehenden Ansprüche, wobei die Reaktionsmischung in Gegenwart von Verstärkungsfasern gehärtet wird, um einen Verbundstoff zu bilden.

8. Verfahren gemäß Anspruch 7, wobei das Epoxidharz und die Härtungsmittelkomponente prallgemischt werden, indem sie separat zu einem Prallmischer geführt werden, unter einem Betriebsdruck von 1 bis 200 MPa, wobei die resultierende Reaktionsmischung in eine Form transferiert wird, die einen Faservorformling enthält, welcher die Verstärkungsfasern umfasst, so dass die Reaktionsmischung um und zwischen die Verstärkungsfasern fließt und die Form füllt, und wobei die Reaktionsmischung anschließend in der Form aushärtet.

9. Verfahren gemäß Anspruch 7, wobei der Duroplast im Vergleich zu einem ansonsten gleichen Duroplast, bei dem der Kern-Hülle-Kautschuk fehlt, einen verringerten Geruch aufweist.

10. Eine Härtungsmittelzusammensetzung, beinhaltend mindestens ein Dicarbonsäureanhydrid auf Norbornenbasis und mindestens einen mit dem Dicarbonsäureanhydrid auf Norbornenbasis vermischten Kern-Hülle-Kautschuk, wobei das mindestens eine Dicarbonsäureanhydrid auf Norbornenbasis mindestens 50 Gew.-% aller Härtungsmittel ausmacht.

11. Härtungsmittelzusammensetzung gemäß Anspruch 10, wobei das Dicarbonsäureanhydrid auf Norbornenbasis Nadicanhydrid, Methylnadicanhydrid oder eine Mischung davon ist.

12. Härtungsmittelzusammensetzung gemäß Anspruch 10 oder 11, wobei Dicarbonsäureanhydrid(e) auf Norbornenbasis 75 bis 100 % der Epoxidhärtungsmittel in der Härtungsmittelkomponente ausmacht/ausmachen.

13. Härtungsmittelzusammensetzung gemäß einem der Ansprüche 10-12, wobei die Härtungsmittelkomponente, bezogen auf das kombinierte Gewicht von Kern-Hülle-Kautschuk und Härtungsmittel(n), zu 6 bis 35 Gew.-% den Kern-Hülle-Kautschuk enthält.

14. Härtungsmittelzusammensetzung gemäß einem der Ansprüche 10-13, wobei die Hülle des Kern-Hülle-Kautschuks ein Polymer oder ein Copolymer von Methylmethacrylat mit einer Glasübergangstemperatur von mindestens 90 °C ist.

15. Härtungsmittelzusammensetzung gemäß einem der Ansprüche 10-14, wobei der Kern des Kern-Hülle-Kautschuks ein Polymer oder ein Copolymer von einem oder mehreren Acrylestern und/oder einem oder mehreren konjugierten Dienmonomeren mit einer Glasübergangstemperatur von nicht mehr als -35 °C ist.

## Revendications

1. Un procédé pour former un thermodurci, comprenant le fait de mélanger au moins une résine époxy avec un composant durcisseur afin de former un mélange réactionnel, le composant durcisseur incluant au moins un anhydride dicarboxylique à base de norbornène et au moins un caoutchouc à coeur-enveloppe mélangé de manière homogène dans ledit anhydride dicarboxylique à base de norbornène préalablement à la formation du mélange réactionnel, et b) le fait de solidifier le mélange réactionnel en présence du catalyseur afin de former le thermodurci.

2. Le procédé de la revendication 1 dans lequel l'anhydride dicarboxylique à base de norbornène est de l'anhydride nadique, de l'anhydride méthyl-nadique ou un mélange de ceux-ci.

3. Le procédé de la revendication 1 ou de la revendication 2, dans lequel le ou les anhydrides dicarboxyliques à base de norbornène constituent de 75 à 100 % des durcisseurs époxy dans le composant durcisseur.

4. Le procédé de n'importe quelle revendication précédente, dans lequel le composant durcisseur contient de 6 à 35 % en poids du caoutchouc à coeur-enveloppe, rapporté au poids combiné de caoutchouc à coeur-enveloppe et de durcisseur(s).

5. Le procédé de n'importe quelle revendication précédente, dans lequel l'enveloppe du caoutchouc à coeur-enveloppe est un polymère ou copolymère de méthacrylate de méthyle ayant une température de transition vitreuse d'au moins 90 °C.

6. Le procédé de n'importe quelle revendication précédente, dans lequel le coeur du caoutchouc à coeur-enveloppe est un polymère ou copolymère d'un ou plusieurs esters acryliques et/ou un ou plusieurs monomères diène conjugués ayant une température de transition vitreuse de pas plus de -35 °C.

7. Le procédé de n'importe quelle revendication précédente, dans lequel le mélange réactionnel est solidifié en présence de fibres de renforcement afin de former un composite.

8. Le procédé de la revendication 7, dans lequel la résine époxy et le composant durcisseur sont mélangés par impaction en les faisant s'écouler séparément jusqu'à un mélangeur par impaction sous une pression de fonctionnement de 1 à 200 MPa, le mélange réactionnel résultant est transféré dans un moule qui contient une préforme de fibres qui inclut les fibres de renforcement, de telle sorte que le mélange réactionnel s'écoule autour et entre les fibres de renforcement et remplit le moule, et le mélange réactionnel se solidifie alors dans le moule.

9. Le procédé de la revendication 7, dans lequel le thermodurci a une odeur réduite, comparé à un thermodurci autrement semblable d'où le caoutchouc à coeur-enveloppe est absent.

10. Une composition de durcisseur comprenant au moins un anhydride dicarboxylique à base de norbornène et au moins un caoutchouc à coeur-enveloppe mélangé de manière homogène dans ledit anhydride dicarboxylique à base de norbornène, ledit au moins un anhydride dicarboxylique à base de norbornène constituant au moins 50 % en poids de tous les durcisseurs.

11. La composition de durcisseur de la revendication 10 dans laquelle l'anhydride dicarboxylique à base de norbornène est de l'anhydride nadique, de l'anhydride méthyl-nadique ou un mélange de ceux-ci.

12. La composition de durcisseur de la revendication 10 ou de la revendication 11, dans laquelle le ou les anhydrides dicarboxyliques à base de norbornène constituent de 75 à 100 % des durcisseurs époxy dans le composant durcisseur.

13. La composition de durcisseur de n'importe lesquelles des revendications 10 à 12, dans laquelle le composant durcisseur contient de 6 à 35 % en poids du caoutchouc à coeur-enveloppe, rapporté au poids combiné de caoutchouc à coeur-enveloppe et de durcisseur(s).

14. La composition de durcisseur de n'importe lesquelles des revendications 10 à 13, dans laquelle l'enveloppe du caoutchouc à coeur-enveloppe est un polymère ou copolymère de méthacrylate de méthyle ayant une température de transition vitreuse d'au moins 90 °C.

15. La composition de durcisseur de n'importe lesquelles des revendications 10 à 14, dans laquelle le coeur du caoutchouc à coeur-enveloppe est un polymère ou copolymère d'un ou plusieurs esters acryliques et/ou un ou plusieurs monomères diène conjugués ayant une température de transition vitreuse de pas plus de -35 °C.
